**Europäisches Patentamt**

**European Patent Office**

**Office européen des brevets**

(19)

(11) Numéro de publication : **0 469 970 A1**

(12) # DEMANDE DE BREVET EUROPEEN

(21) Numéro de dépôt : **91402083.9**

(22) Date de dépôt : **25.07.91**

(51) Int. Cl.$^5$ : **G06K 19/06**

(30) Priorité : **30.07.90 FR 9009695**

(43) Date de publication de la demande :
**05.02.92 Bulletin 92/06**

(84) Etats contractants désignés :
**DE ES GB IT NL**

(71) Demandeur : **GEMPLUS CARD INTERNATIONAL S.A.**
**Avenue du Pic de Bertagne, Zone d'Activités de la Plaine de Jouques**
**F-13420 Gemenos (FR)**

(72) Inventeur : **Coiton, Gérard, CABINET BALLOT-SCHMIT**
**7, rue Le Sueur**
**F-75116 Paris (FR)**

(74) Mandataire : **Schmit, Christian Norbert Marie et al**
**Cabinet Ballot-Schmit 7, rue Le Sueur**
**F-75116 Paris (FR)**

(54) **Procédé de fabrication d'une carte à microcircuit et carte obtenue par ce procédé.**

(57)     La carte obtenue par le procédé selon l'invention est constituée d'un support plastique S, et d'un micromodule M lié au support par une liaison mobile. Pour cela, un trou de dimensions légèrement supérieures à celles du micromodule est prévu dans le support S, au moins deux bords parallèles de ce trou étant prévus avec des prolongements en queue d'aronde. Le micromodule comporte une plaque G, qui s'appuie sur les bords en queue d'aronde et sur laquelle est fixé le microcircuit μC, enrobé de résine R. Ce micromodule est engagé dans le trou prévu dans le support, et une seconde plaque P, s'appuyant également sur les bords en queue d'aronde, est rapportée sur le micromodule et permet le maintien en position du micromodule.

    L'invention s'applique aux cartes soumises à des sollicitations mécaniques, pour éviter les ruptures de connexions et de microcircuit de grande surface.

**FIG_4**

EP 0 469 970 A1

L'invention se rapporte au domaine des cartes à "puce", c'est à dire aux cartes comportant des microcircuits, et a plus particulièrement pour objet un procédé de fabrication d'une telle carte, et une carte obtenue par ce procédé.

Différentes méthodes ont été mises au point pour insérer un micromodule comportant un circuit intégré dans un support plastique et former ainsi une carte à microcircuit :

Selon une première méthode un logement est formé dans un support plastique; puis le micromodule y est collé, les contacts du circuit intégré étant ramenés sur une grille de conducteurs formés sur la face avant.

Une autre solution consiste à injecter le plastique destiné à former le support plastique dans un moule dans lequel a été disposé, préalablement, le microcircuit, le plastique venant ainsi se mouler tout autour du micromodule.

Une autre solution consiste à utiliser des feuilles de plastique superposées pour former le support, par laminage et collage, le micromodule étant inséré dans une découpe préalable effectuée dans un nombre prédéterminé de feuilles formant un logement exactement aux dimensions du micromodule.

Toutes ces solutions sont telles que le micromodule est inséré dans le support sans aucune souplesse, le plastique et le micromodule étant jointifs.

Or les cartes de ce type sont utilisées stockées, transportées, par leurs utilisateurs et de nombreuses occasions de contraintes interviennent lors des manipulations des cartes. Ces contraintes conduisent fréquemment à des défauts créés par les déformations mécaniques appliquées à la carte, ces déformations créant notamment des ruptures de connexions du microcircuit.

Des améliorations visant à introduire une souplesse plus grande dans la structure carte à microcircuit ont été recherchées, par exemple par la création de fentes dans le support plastique au voisinage du micromodule pour empêcher la transmission des contraintes appliquées à la carte jusqu'au micromodule, par exemple lors d'une flexion de la carte. De telles améliorations sont efficaces mais compliquent le procédé de fabrication de la carte à micromodule.

La présente invention a pour objet un procédé de fabrication d'une carte à microcircuit, tel que la carte obtenue présente une liaison souple entre le support plastique et le micromodule et, évite ainsi les inconvénients sus-mentionnés.

Selon l'invention, le procédé de fabrication d'une carte à microcircuit, est caractérisé en ce qu'il consiste à réaliser indépendamment d'une part un support plastique dans lequel un trou est ménagé pour qu'un micromodule puisse y être logé, le trou étant pourvu sur au moins deux bords opposés parallèles de moyens de maintien du micromodule, et d'autre part le micromodule dans lequel est inséré le microcircuit, pourvu de moyens de maintien destinés à former avec les moyens de maintien prévus sur le support, une liaison mobile, ce micromodule étant alors logé dans le trou ménagé à cet effet dans le support plastique, la liaison mobile étant telle qu'à l'issue du montage le micromodule est maintenu dans le support plastique sans que les contraintes appliquées à la carte lui soient transmises.

L'invention sera mieux comprise et d'autres caractéristiques apparaîtront à partir de la description détaillée ci-après, en référence aux figures annexées.

La figure 1 illustre une étape de la fabrication du support plastique.

La figure 2 illustre une étape de la fabrication du micromodule dans lequel est inséré le microcircuit.

La figure 3 illustre en plan la carte obtenue à l'issue du procédé de fabrication selon l'invention.

Les figures 4 et 5 illustrent en coupe suivant deux axes orthogonaux la carte résultant du procédé selon l'invention.

La figure 6 illustre en coupe une carte obtenue selon une variante du procédé, selon l'invention.

Suivant l'invention, le support plastique est préformé pour disposer de moyens de maintien souples du micromodule sur les bords d'un trou de dimensions légèrement supérieures à celles du micromodule, et de préférence seulement le long des bords parallèles à la plus grande dimension de la carte. Le micromodule est également préformé pour disposer de moyens de maintien, complémentaires des moyens de maintien prévus sur le support plastique. Selon un mode de réalisation préféré, les bords du trou, prévu dans le support plastique pour l'insertion du micromodule, sont en forme de queue d'aronde et le micromodule est préformé sur les bords correspondants en forme de "U" de façon que les branches du "U" s'appuient sur la queue d'aronde.

La description détaillée qui suit permettra de mieux comprendre l'invention.

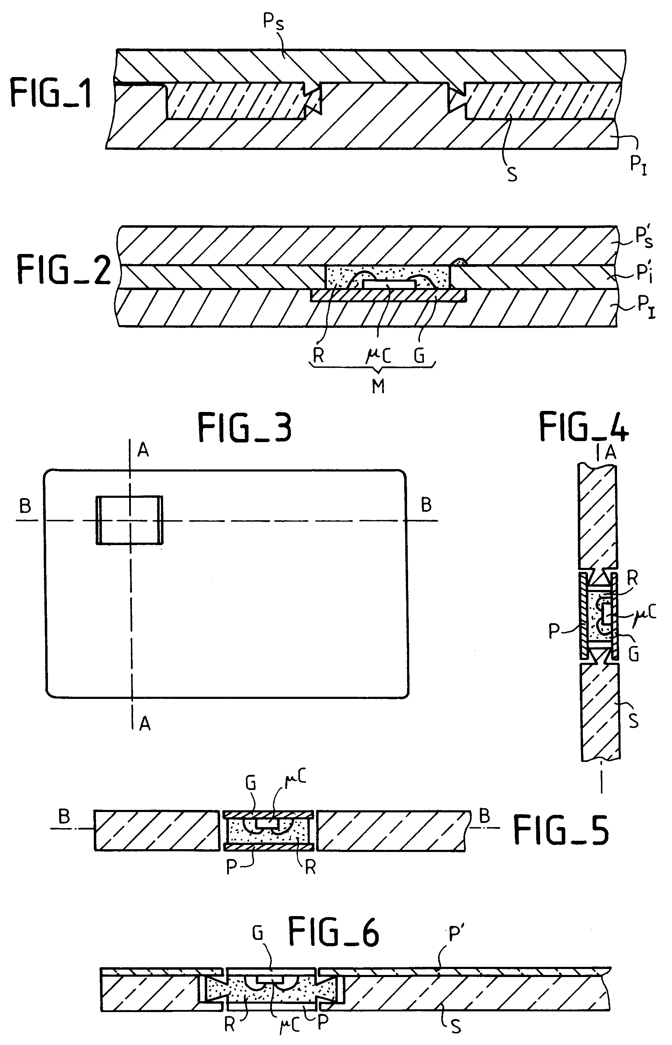

La figure 1 illustre un mode de réalisation par moulage du support plastique dans lequel est ensuite inséré le micromodule comportant le microcircuit intégré. Sur cette figure a été représenté le moule en deux parties inférieure et supérieure respectivement, $P_i$ et $P_s$, dans lequel est injecté le matériau plastique. Comme représenté, les deux parties du moule sont telles que le support plastique issu du moulage présente un trou dont deux bords parallèles, sont en forme de queues d'aronde, le trou étant rectangle. De préférence les deux autres bords parallèles du trou sont droits. Pour mieux illustrer l'invention, le moule et le support S ont été interrompus de façon que le support au voisinage du trou soit représenté à grande échelle.

La figure 2 illustre une étape de la fabrication d'un micromodule destiné à être inséré dans un tel support. Ce micromodule est réalisé de la manière suivante: le microcircuit µC muni de ses fils de contacts est dans une première phase mis en place sur une grille métallique conductrice G, sans support, portant les contacts extérieurs du micromodule. Le microcircuit est mis en place de manière classique par collage et soudure des contacts (wire bonding). Cette grille G, munie du microcircuit, est alors placée sur la plaque inférieure P′ᵢ d'un moule en trois parties par exemple. Cette plaque inférieure comportant un logement adapté aux dimensions de la grille G. Une plaque intermédiaire P′ᵢ pourvue d'un trou de longueur inférieure à celle de la grille G portant le microcircuit dans la dimension destinée à la liaison avec support plastique, est alors posée sur la plaque inférieure P′ᵢ du moule. Enfin une plaque supérieure P′ₛ est déposée sur l'ensemble. Une amorce d'injection dans la plaque supérieure permet alors d'injecter, autour du microcircuit et de ses fils de contact, une résine type résine époxy R qui après refroidissement et démoulage forme un ensemble micromodule M constitué de la grille G, du microcircuit μC, et de la résine durcie R. Cet ensemble est alors prêt à être monté dans le support plastique, de la manière suivante illustrée, en référence aux figures 3,4 et 5.

La figure 3 illustre en vue de dessus la carte obtenue par le procédé selon l'invention, avec son support plastique S et le micromodule M. Comme illustré par la figure 4 qui est une vue en coupe selon AA, parallèlement au petit coté de la carte, le micromodule M est posé sur le support plastique et la grille G s'appuie ainsi sur les bords en queue d'aronde prévus sur le support plastique. Comme illustré par la figure 5 qui est une vue en coupe de la carte selon BB, parallèlement au grand coté de la carte, lorsque le micromodule M est ainsi posé sur le support plastique S, les bords du micromodule parallèles au petit coté de la carte sont dans ce mode de réalisation libres. La dernière étape du procédé consiste alors à coller une plaque en métal sur la face en résine du micromodule, cette plaque P s'appuyant alors également sur les bords en queue d'aronde du support plastique.

De préférence les dimensions, en longueur et largeur, de la grille G et de la plaque rapportée P sont les mêmes et sont légèrement inférieures à celles du trou ménagé dans le support plastique, non compris les bords en queue d'aronde, de façon qu'un jeu suffisant existe entre le micromodule et le support plastique. Ainsi une flexion de la carte n'apporte aucune contrainte sur le micromodule . L'épaisseur totale du micromodule, muni de la plaque rapportée est au plus égale à celle du support plastique. L'épaisseur de la grille G peut être de l'ordre de 0,12 mm tandis que l'épaisseur de la plaque P peut être de l'ordre de 0,15 mm à 0,20 mm, l'épaisseur du support plastique étant de l'ordre du millimètre.

La carte résultant de ce procédé de fabrication est telle que les contraintes appliquées au support lors des différentes manipulations de la carte ne sont pour ainsi dire plus transmises au micromodule du fait des discontinuités support plastique S/grille G ou support plastique S/plaque P. Les flexions de la carte les plus fréquentes, dans la longueur de la carte, sont quasi insensibles du fait que les chants sont droits et qu'aucun appui n'est prévu parallèlement aux petits cotés. Les flexions, plus rares, dans la largeur de la carte se traduisent par un changement de l'angle entre la queue d'aronde et le plan du micromodule, mais n'apportent pas de déformations sensibles au micromodule. En conséquence, les problèmes de rupture de connexions dus aux déformations de la carte sont ainsi évités.

L'invention n'est pas limitée au mode de réalisation décrit ci-dessus. En particulier, les bords du support plastique sur lesquels s'appuient la grille et la plaque du micromodule a été décrits comme ayant une forme en queue d'aronde. Toute autre forme permettant d'obtenir un résultat équivalent, par exemple une forme arrondie, peut être utilisée, pourvu que le micromodule soit toujours indépendant du support plastique.

De même, il a été décrit un support plastique muni d'un trou dont deux bords ont la forme de queue d'aronde, le micromodule ayant ses faces latérales correspondantes en forme de "U". Il est possible de réaliser le support plastique avec les bords du trou en forme de "U" et les bords correspondants du micromodule en forme de queue d'aronde. Le procédé est alors inversé, c'est à dire que la plaque rapportée est alors une plaque P′ rapportée sur le support. La figure 6 illustre en coupe un tel mode de réalisation où les mêmes éléments sont désignés par les mêmes repères.

Enfin, il peut être nécessaire pour certains types de cartes d'assurer un maintien plus important du micromodule. Dans ce cas on peut prévoir des moyens de maintien du type décrit ci-dessus sur les quatre faces latérales du micromodule et sur le tour du trou prévu dans le support plastique,et non plus seulement, sur les deux faces parallèles au grand coté de la carte.

La caractéristique principale de la liaison entre le support plastique et le micromodule est toujours d'être mobile, les arêtes de la queue d'aronde s'appuyant sur une surface plane dans le mode de réalisation détaillé.

De plus pour la fabrication du support plastique ou du micromodule lui-même, toutes autres techniques pour la mise en oeuvre des différentes phases du procédé selon l'invention peuvent être utilisés.

**Revendications**

1- Carte à microcircuit comprenant, d'une part un support plastique (S) dans lequel un trou est ménagé pour qu'un micromodule (M) puisse y être logé, le trou étant pourvu sur au moins deux bords opposés parallèles de premiers moyens de maintien du micromodule, et d'autre part ledit micromodule (M) dans lequel est inséré le microcircuit (μC), ce micromodule étant pourvu de deuxième moyens de maintien destinés à former avec les premiers moyens de maintien prévus sur le support, une liaison mobile, ce micromodule étant alors logé dans le trou ménagé à cet effet dans le support plastique, caractérisée en ce que les premiers ou les deuxième moyens de maintien sont des queues d'aronde prolongeant ce support plastique ou ce micromodule sur les bords correspondants du trou, et en ce que lors de l'insertion du micromodule dans le trou du support, une première plaque s'appuie d'un côté des bords en queue d'aronde sur ces bords en queue d'aronde, et une seconde plaque (P) s'appuie de l'autre côté de ces bords en queue d'aronde sur ces bords en queue d'aronde.

2- Carte selon la revendication 1, caractérisée en ce que le support plastique est prolongé en queue d'aronde sur les bords du trou parallèles à la grande dimension de la carte.

3- Carte selon la revendication 1, caractérisée en ce que le micromodule est prolongé en queue d'aronde parallelement à la grande dimension de la carte.

4- Carte selon l'une des revendications 1 à 3, caractérisée en ce que le micromodule est réalisé par collage et soudure du microcircuit (μC) sur la première plaque (G) puis injection de résine (R) autour du microcircuit dans un volume de dimensions en longueur et largeur, sensiblement inférieures à celles de la première plaque (G), la seconde plaque (P) étant rapportée après positionnement du micromodule dans son logement et ayant sensiblement les mêmes dimensions en longueur et largeur que la première plaque (G).

5- Carte selon l'une des revendications précédentes, caractérisé en ce que le support plastique avec les bords de maintien est réalisé par moulage.

6-Carte selon l'une des revendications 1 à 5, caractérisée en ce que le support plastique (S) et le micromodule (M) qui est logé dans le trou prévu à cet effet dans le support plastique ont au moins sur deux bords parallèles, les moyens de maintien étant tels que le micromodule est maintenu dans le support par une liaison mobile quine transmet pas au micromodule les contraintes appliquées au support plastique.

**FIG_1**

$P_S$

$S$

$P_I$

**FIG_2**

$P'_S$

$P'_i$

$P_I$

R $\mu$C G

M

**FIG_3**

A

B                                    B

A

**FIG_4**

A

R

$\mu$C

P

G

S

I

**FIG_5**

G $\mu$C

B                                    B

P        R

**FIG_6**

G                          P'

R   $\mu$C   P        S

5

# EP 0 469 970 A1

<table>
<tr><td colspan="2"></td><td>Office européen<br>des brevets</td><td><b>RAPPORT DE RECHERCHE EUROPEENNE</b></td><td>Numero de la demande<br><br>EP 91 40 2083</td></tr>
</table>

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-2 096 541 (GAO)<br>* En entier *<br>--- | 1,3,4,6 | G 06 K 19/06 |
| A | FR-A-2 628 867 (THOMSON)<br>* En entier *<br>--- | 1,2,3,6 | |
| A | FR-A-2 538 930 (SEIICHIRO)<br>* En entier *<br>--- | 1,6 | |
| A | EP-A-0 331 316 (A.T.T.)<br>* Colonne 3, ligne 1 - colonne 4, ligne 24; figures 1,2 *<br>--- | 1,6 | |
| A | EP-A-0 322 320 (GEMPLUS)<br>* Colonne 4, lignes 53-65; figure 5 *<br>----- | 4 | |
| | | | **DOMAINES TECHNIQUES RECHERCHES (Int. Cl.5)**<br><br>G 06 K |

Le présent rapport a été établi pour toutes les revendications

| Lieu de la recherche | Date d'achèvement de la recherche | Examinateur |
|---|---|---|
| LA HAYE | 12-11-1991 | FORLEN G.A. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.................................................................
& : membre de la même famille, document correspondant

EPO FORM 1503 03.82 (P0402)